# EUROPÄISCHE PATENTSCHRIFT

(11) **EP 1 595 825 B1**
(45) Veröffentlichungstag und Bekanntmachung des Hinweises auf die Patenterteilung: **04.03.2009**
(21) Anmeldenummer: 05009738.5
(22) Anmeldetag: 04.05.2005
(51) Int. Cl.: B65G 21/20, B65G 17/48

(54) **Kettenförderer zum Transport plattenförmiger Werkstücke**
Chain conveyor for transporting plate-like workpieces
Transporteur à chaîne pour le transport de pièces plates

(30) Priorität: 10.05.2004 DE 102004023494
(43) Veröffentlichungstag der Anmeldung: 16.11.2005
(73) Patentinhaber: Homag Holzbearbeitungssysteme AG, 72296 Schopfloch (DE)
(72) Erfinder: Rathgeber, Peter, 72280 Dornstetten (DE); Gauss, Achim, 72280 Dornstetten/Hallwangen (DE)
(74) Vertreter: Schober, Mirko

(56) Entgegenhaltungen:
- EP-A- 0 286 173
- EP-A- 1 378 320
- EP-A1- 0 916 599
- US-A- 5 997 423

## Beschreibung

Die Erfindung bezieht sich auf einen Kettenförderer zum Transport von plattenförmigen Werkstücken an einer Maschine zum Bearbeiten dieser Werkstücke. Hierbei betrifft die Erfindung insbesondere die Kettenführung der Transportkette an einer Maschine zum Bearbeiten der Werkstücke im Durchlauf, wobei an den Kettengliedern Laufrollen und Führungsrollen angeordnet sind und am Maschinengestell wenigstens eine Führungsschiene entlang zumindest einem Abschnitt des Umlaufweges der Transportkette angeordnet ist. Diese Führungsschiene weist zwei voneinander beabstandete Laufbahnen für die Laufrollen der Kettenglieder und dazwischen ein Nutprofil auf, in welches die Führungsrollen der Kettenglieder eintauchen, die auf an den Kettengliedern vorstehenden, durch die Führungsrollen hindurchragenden Achsbolzen für die Führungsrollen gelagert sind, wobei die Transportkette über Kettenräder umgelenkt wird, von denen zumindest eines als Antriebskettenrad ausgebildet ist.

Solche Kettenförderer, welche dem Oberbegriff des Anspruchs 1 entsprechen, werden vorwiegend bei Holzbearbeitungsmaschinen eingesetzt, wobei es sich bei den auf der Transportkette aufzunehmenden Werkstücken um Möbelteile, Platten für den Innenausbau oder sonstige im Baubereich zu verwendende Platten aus Holz oder einem holzartigen Werkstoff handelt. Die für diese Zwecke konzipierten Durchlaufmaschinen werden für ständig höhere Fördergeschwindigkeiten ausgelegt, wodurch verstärkt Verschleißprobleme auftreten. Die mit Laufrollen und Führungsrollen versehenen Kettenglieder führen unkontrollierbare Schlingerbewegungen aus, welche das einwandfreie Abwälzen der Lauf- und Führungsrollen in den Führungsprofilen erheblich beeinträchtigen, die sich in der Regel nicht nur entlang dem Obertrum der Transportkette, sondern auch entlang dem Umlenkbereich an den Kettenrädern erstrecken.

Die störenden Schwingungen führt man in erster Linie darauf zurück, daß die Transportkette beim Umlauf um die Kettenräder die Form eines Polygons annimmt, in die hinein und aus der heraus die einzelnen Kettenglieder wegen der im übrigen gestreckten Lage umgelenkt werden müssen. Vor allem am Antriebskettenrad wirken aufgrund des Polygoneffektes pulsierende Zugkräfte auf die Kette. Die hierdurch induzierten Schwingungen in der Transportkette verhindern, daß sich die Laufrollen und Führungsrollen der Kettenglieder nicht in einem gleichmäßigen Kontakt mit den Laufbahnen im Führungsprofil der Führungsschienen befinden, sondern sporadisch davon abheben und wieder darauf aufschlagen. Die damit verbundenen Beschleunigungs- und Entschleunigungsvorgänge sowie die schlagartige Kraftwirkung auf die Rollen, die Führungsprofile und die Kettenräder führen zu einem sehr starken Verschleiß all dieser Bauteile und ihren Baugruppen in kurzer Zeit, und es kommt zum Ausfall des Transportsystems. Begünstigt werden die schädlichen Schwingungen noch durch eine lose, hängende Rückführung des Untertrums der Transportkette.

Aus dem nachveröffentlichten Dokument DE 103 23 910 A1 geht bereits eine Führung für Transportketten hervor, bei der in die Führungsschiene Dauermagnete eingefügt sind, die sich in unmittelbarer Nachbarschaft der Laufbahnen für die Laufrollen der Kettenglieder befinden. Der magnetische Kreis der Dauermagnete schließt sich hier über die Laufbahnen und die darauf abwälzenden Laufrollen der Kettenglieder, wobei ein Luftspalt zwischen der äußeren Stirnseite der Laufrollen und einem Steg an der Führungsschiene vorgesehen ist, der seitlich der Laufbahn vorstehend angeordnet ist. Da die Laufrollen die Laufbahn der Führungsschiene im wesentlichen linienförmig berühren und die Magnetkräfte im Luftspalt achsparallel auf die Laufrollen der Kettenglieder einwirken, ergeben sich bei dieser magnetischen Kettenlenkung keine optimalen Bedingungen für die Schwingungsdämpfung der Transportkette.

Das Dokument EP 0 286 173 A1 beschreibt eine andere Art von Kettenförderern, die als Magnetkettenförderer bezeichnet werden und deren Kettenglieder in einer Ebene flachliegend kurvenförmige Abschnitte einer Führungsbahn durchlaufen. Die Führungsbahn weist ein Nutprofil auf, in welches die Kettenglieder mit Führungselementen eingreifen. Damit die Kettenglieder aufgrund der sie fördernden Zugkräfte sich nicht aus dem Nutprofil herausheben, werden insbesondere in den Kurvenabschnitten Magnete eingesetzt, welche die Kettenglieder in der Verfahrebene halten. Die Magnete sind am Grund des Nutprofils angeordnet, und der magnetische Kreis schließt sich über die zur Verfahrebene parallel liegenden Gelenkbolzen der die Kettenglieder miteinander verbindenden Gelenke. Bei diesen Magnetkettenförderern sind die Kettenglieder nicht mit Laufrollen ausgestattet, vielmehr sind miteinander korrespondierende Gleitflächen an den Kettengliedern und den Führungsbahnen vorgesehen.

Der Erfindung liegt die Aufgabe zugrunde, einen Kettenförderer mit einer Transportkette zu schaffen, wobei die Transportkette rollengelagerte Kettenglieder aufweist und eine Kettenführung mit Laufbahnen vorgesehen ist, bei der mittels magnetischer Kräfte eine Schwingungsdämpfung zur Erhöhung der Standzeiten der Kettenglieder und der Laufbahnen erreicht wird.

Diese Aufgabe wird bei einem Kettenförderer der eingangs genannten Art dadurch gelöst, daß am Grund des Nutprofils der Führungsschiene Magnete angeordnet sind, deren magnetischer Kreis sich über die freien Enden der Achsbolzen an den Kettengliedern über einen Luftspalt hinweg schließt.

Für die Erfindung ist wesentlich, daß die im Luftspalt wirkenden Magnetkräfte im wesentlichen in orthogonaler Richtung zu den Laufbahnen der Führungsschiene für die Laufrollen an den Kettengliedern wirken und die Kettenglieder zu den Führungsschienen hin anziehen. Dadurch kann wirksamer verhindert werden, daß die Kettenglieder von den Laufbahnen der Führungsschiene abheben, so daß ein Prellen der Laufrollen der Kettenglieder auf den Laufbahnen verhindert ist und die dadurch bedingten Verschleiß-erscheinungen vermieden sind.

Vorteilhafte Ausgestaltungsmerkmale der Erfindung ergeben sich aus den Unteransprüchen.

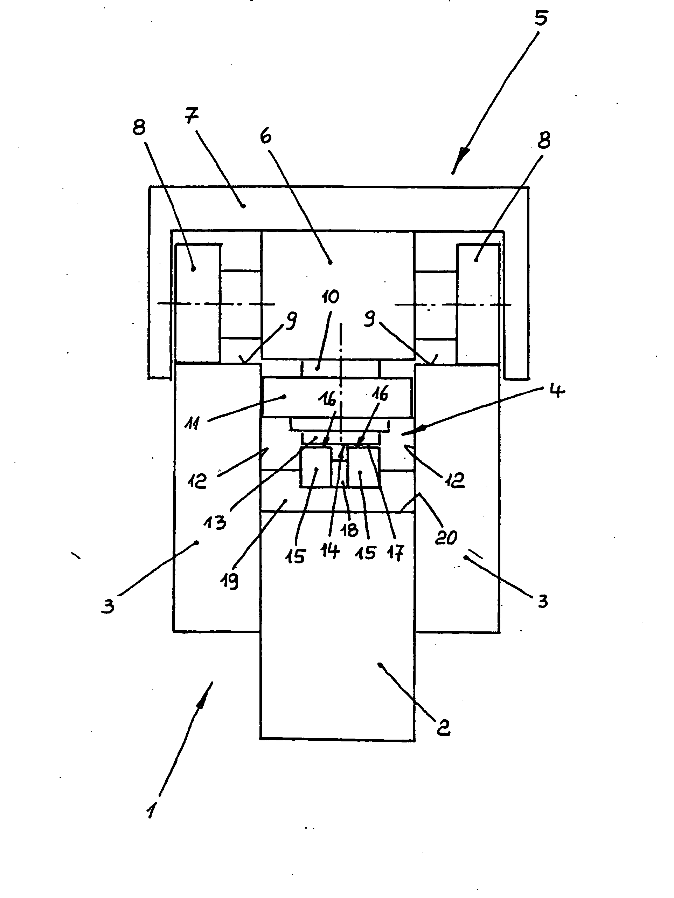

Die Erfindung wird nachfolgend anhand der Zeichnung an einem Ausführungsbeispiel noch näher erläutert. Die Zeichnung zeigt in der Stirnansicht eine Führungsschiene für eine Werkstück-Transportkette einschließlich einem Kettenglied der Transportkette.

Die Zeichnung zeigt im einzelnen eine Führungsschiene 1, die einen mittigen Träger 2 aufweist. Seitlich an dem Träger 2 sind Tragschienen 3 angeordnet, welche über die in der Darstellung nach oben hin liegende Oberseite 20 des Trägers 2 vorstehen. Zwischen den Tragschienen 3 ist ein Nutprofil 4 gebildet, welches einen rechteckförmigen oder quadratischen Querschnitt aufweist. Insgesamt ist die Führungsschiene 1 zu einer durch den Träger 2 hindurchgehenden vertikalen Mittenebene spiegelsymmetrisch ausgebildet.

Die Führungsschiene 1 dient zur Führung einer in der Zeichnung insgesamt nicht dargestellten Transportkette, von der lediglich ein einziges Kettenglied 5 zu erkennen ist. Das Kettenglied 5 weist einen Kettengliedkörper 6 auf, auf den eine Werkstück-Tragplatte 7 aufgesetzt ist. Seitlich am Kettengliedkörper 6 sind Laufrollen 8 angeordnet, die auf Laufbahnen 9 abwälzen, die von höhengleichen Oberseiten der Tragschienen 3 der Führungsschiene 1 gebildet sind. Die Laufrollen 8 haben horizontale Achsen und sind in der Regel als zylindrische Körper ausgebildet, so daß sich dementsprechend die Laufbahnen 9 zumindest längs des Werkstück-Transportweges in einer Horizontalebene erstrecken. Die Transportkette ist über zwei Kettenräder umgelenkt und verläuft dementsprechend entlang einem ovalen Umlaufweg mit geradlinig sich erstreckendem Obertrum und Untertrum. Entlang dem Umlaufweg sind analog zur dargestellten Führungsschiene 1 ausgebildete Führungsschienen angeordnet. Im Umlenkbereich der Transportkette verlaufen die Führungsschienen entlang der Kettenräder halbkreisförmig. Beim Untertrum der Transportkette ergibt sich eine Anordnung der dortigen Führungsschiene in kopfstehender Ausführung zur in der Zeichnung wiedergegebenen Führungsschiene 1.

In vertikaler Richtung bezogen auf den horizontalen Werkstück-Transportweg steht am Kettengliedkörper 6 jedes Kettengliedes 5 ein Achsbolzen 10 vor, auf dem eine Führungsrolle 11 gelagert ist. Die Führungsrolle 11 übernimmt die Seitenführung der Transportkette und wälzt sich auf einer der Innenseiten 12 der Tragschienen 3 der Führungsschiene 1 ab. Die Führungsrolle 11 hat einen Durchmesser, der mininal kleiner als der Abstand der beiden einander gegenüberliegenden Innenseiten 12 der Tragschienen 3 ist. Zu derjenigen Innenseite 12 der Tragschienen 3, an der sich die Führungsrolle 11 augenblicklich nicht abwälzt, besteht somit ein minimaler Luftspalt, um Reibungsverluste zu verhindern. Aufgrund der beschriebenen Anordnung tauchen der Achsbolzen 10 und die Führungsrolle 11 der Kettenglieder 5 in das Nutprofil 4 der Führungsschiene 1 ein. Der Achsbolzen 10 ragt durch die Führungsrolle 11 hindurch und weist dementsprechend ein freies, über die Führungsrolle 11 vorstehendes Ende 13 auf, welches mit einer planen Stirnfläche 14 ausgeführt ist.

Am Grund des Nutprofils 4 sind Magnete 15 angeordnet, bei denen es sich entweder um Dauermagnete oder um elektrisch erregte Magnete handelt. Die Magnete 15 sind in eine Aufnahmevorrichtung 19 eingelassen, die auf der Oberseite 20 des Trägers 2 der Führungsschiene 1 aufgesetzt ist und die seitlich an die Innenseiten 12 der Tragschienen 3 der Führungsschiene 1 anschließt. Die Aufnahmevorrichtung 19 kann die Funktion eines magnetischen Joches für die Magnete 15 übernehmen, zwischen den Magneten 15 befindet sich ein Distanzelement 18, welches entweder als Isoliertteil ausgebildet ist oder ebenfalls als magnetisches Joch für die Magnete 15 fungieren kann.

An ihren Oberseiten weisen die Magnete 15 ebene Polflächen 16 auf, denen die sich relativ dazu bewegenden Stirnflächen 14 der Achsbolzen 10 an den Kettengliedern 5 über einen Luftspalt 17 hinweg gegenüberliegen. Zumindest im Bereich der gerade verlaufenden Führungsschienen 1 ist dieser Luftspalt 17 horizontal ausgerichtet, weil in diesen Bereichen die Stirnflächen 14 an den Achsbolzen 10 der Kettenglieder 5 und die Polflächen 16 der Magnete 15 horizontal ausgerichtet und demgemäß miteinander parallel sind.

Man kann - anders als dargestellt - dem Luftspalt 17 und entsprechend den Stirnflächen 14 der Achsbolzen 10 der Kettenglieder 5 und den damit parallelen Polflächen 16 der Magnete 15 eine von der Horizontalrichtung abweichende Neigung geben, um die Magnetkräfte derart auf die Kettenglieder 5 wirken zu lassen, daß deren Führungsrollen 11 sich ausschließlich an einer der Tragschienen 3 abwälzen, womit sogar auf die dieser Tragschiene 3 gegenüberliegende Tragschiene verzichtet werden kann.

## Patentansprüche

1. Kettenförderer zum Transport von plattenförmigen Werkstücken an einer Maschine zum Bearbeiten dieser Werkstücke
- mit einer endlos umlaufenden Transportkette, deren Kettenglieder (5) Laufrollen (8) und Führungsrollen (11) aufweisen, wobei die Führungsrollen (11) auf an den Kettengliedern (5) vorstehenden, durch die Führungsrollen (11) hindurchragenden Achsbolzen (10) gelagert sind;
- mit Kettenrädern, über welche die Transportkette umgelenkt wird, von denen zumindest eines als Antriebskettenrad ausgebildet ist;
- und mit einer Kettenführung bestehend aus einer entlang zumindest einem Abschnitt des Umlaufweges der Transportkette angeordneten Führungsschiene (1), die zwei voneinander beabstandete Laufbahnen (9) für die Laufrollen (8) der Kettenglieder (5) und dazwischen ein Nutprofil (4) aufweist, in welches die Führungsrollen (11) der Kettenglieder (5) eintauchen,
**dadurch gekennzeichnet,**
**daß** am Grund des Nutprofils (4) der Führungsschiene (1) Magnete (15) angeordnet sind, deren magnetischer Kreis sich über die freien Enden der Achsbolzen (10) an den Kettengliedern (5) über einen Luftspalt (17) hinweg schließt.

2. Kettenförderer nach Anspruch 1,
**dadurch gekennzeichnet,**
**daß** die Achsbolzen (10) an den Kettengliedern (5) an ihren freien Enden (13) ebene Stirnflächen (14) haben, denen jeweils ebene Polflächen (16) der Magnete (15) jenseits des Luftspaltes (17) gegenüberliegen.

3. Kettenförderer nach Anspruch 2,
**dadurch gekennzeichnet,**
**daß** bei geradlinig verlaufender Führungsschiene (1) die Stirnflächen (14) der Achsbolzen (10) der Kettenglieder (5) und die Polflächen (16) der Magnete (15) miteinander parallel sind.

4. Kettenförderer nach Anspruch 3,
**dadurch gekennzeichnet,**
**daß** entlang horizontaler Abschnitte des Umlaufweges der Transportkette die Stirnflächen (14) der Achsbolzen (10) der Kettenglieder (5) und die Polflächen (16) der Magnete (15) horizontal ausgerichtet sind.

5. Kettenförderer nach Anspruch 3,
**dadurch gekennzeichnet,**
**daß** die Stirnflächen (14) der Achsbolzen (10) der Kettenglieder (5) und die Polflächen (16) der Magnete (15) aus der Horizontalrichtung bzw. der jeweiligen Umlaufrichtung heraus in Richtung quer zur Laufrichtung der Kettenglieder (5) geneigt sind.

6. Kettenförderer nach Anspruch 1 - 5,
**dadurch gekennzeichnet,**
**daß** die Magnete (15) Dauermagnete sind.

7. Kettenförderer nach einem der Ansprüche 1 - 6,
**dadurch gekennzeichnet,**
**daß** die Führungsschiene (1) aus einem mittigen Träger (2) und daran seitlichen, über den Träger (2) vorstehenden Tragschienen (3) besteht, die zwischen sich das Nutprofil (4) einschließen, wobei die Magnete (15) auf einer das Nutprofil (4) begrenzenden Oberseite (20) des Trägers (2) angeordnet sind.

8. Kettenförderer nach Anspruch 7,
**dadurch gekennzeichnet,**
**daß** auf der Oberseite (20) des Trägers (2) der Führungsschiene (1) eine Aufnahmevorrichtung (19) für die Magnete (15) aufgesetzt ist.

9. Kettenförderer nach Anspruch 8,
**dadurch gekennzeichnet,**
**daß** die Aufnahmevorrichtung (19) für die Magnete (15) im Nutprofil (4) zwischen den Tragschienen (3) der Führungsschiene (1) formschlüssig eingeschlossen ist.

## Claims

1. Chain conveyor for transporting plate-like workpieces on a machine for machining these workpieces
- with an endlessly revolving transport chain whose chain links (5) have rollers (8) and guide rollers (11) wherein the guide rollers (11) are mounted on axle bolts (10) which protrude at the chain links (5) and project through the guide rollers (11);
- with chain wheels over which the transport chain is guided and of which at least one is designed as a drive chain wheel;
- and with a chain guide consisting of a guide rail (1) which is mounted along at least one section of the revolving path of the transport chain and which has two mutually spaced tracks (9) for the rollers (8) of the chain links (5) and inbetween a grooved profile (4) into which the guide rollers (11) of the chain links project,
- **characterised in that** at the bottom of the grooved profile (4) of the guide rail (1) there are magnets (15) disposed with their magnetic circle closing over an air gap (17) above the free ends of the axle bolts (10) on the chain links (5).

2. Chain conveyor according to claim 1
**characterised in that** the axle bolts (10) on the chain links (5) have at their free ends (13) flat end faces (14) which are opposite each flat pole face (16) of the magnets (15) on the opposite side of the air gap (17).

3. Chain conveyor according to claim 2
**characterised in that** where the guide rail (1) runs in a straight line the end faces (14) of the axle bolts (10) of the chain links (5) and the pole faces (16) of the magnets (15) are parallel with one another.

4. Chain conveyor according to claim 3
**characterised in that** along horizontal sections of the revolving path of the transport chain the end faces (14) of the axle bolts (10) of the chain links (5) and the pole faces (16) of the magnets (15) are aligned horizontal.

5. Chain conveyor according to claim 3 **characterised in that** the end faces (14) of the axle bolts (10) of the chain links (5) and the pole faces (16) of the magnets (15) are inclined from the horizontal direction or from the relevant revolving direction in a direction transverse to the running direction of the chain links (5).

6. Chain conveyor according to claim 1 to 5
**characterised in that** the magnets (15) are permanent magnets.

7. Chain conveyor according to one of claims 1 to 6
**characterised in that** guide rail (1) consists of a centre support (2) and adjoining side support rails (3) which protrude beyond the support (2) and include between them the grooved profile (4) wherein the magnets (15) are mounted on a top side (20) of the support (2) defining the grooved profile (4).

8. Chain conveyor according to claim 7
**characterised in that** a socket device (19) for the magnets (15) is fitted on the top side (20) of the support (2) of the guide rail (1).

9. Chain conveyor according to claim 8
**characterised in that** the socket device (19) for the magnets (15) is set with positive locking engagement in the grooved profile (4) between the support rails (3) of the guide rail (1).

## Revendications

1. Transporteur à chaîne pour le transport de pièces en forme de plaques à une machine de traitement de ces pièces,
- avec une chaîne de transport continue sans fin, dont les éléments de chaîne (5) présentent des galets de roulement (8) et des galets de guidage (11), les galets de guidage (11) étant montés sur des axes-boulons (10), qui, en saillie des éléments de chaîne, traversent les galets de guidage (11);
- et avec un guidage de chaîne consistant en un rail de guidage (1), qui, disposé le long d'au moins une section du chemin de roulement continu de la chaîne de transport, présente, pour les galets de roulement (8), deux voie de roulement (9) des éléments de chaîne (5) distancées l'une de l'autre, et, entre celles-ci, un profilé rainuré (4), dans lequel s'enfoncent les galets de guidage (11) des éléments de chaîne (5),
**caractérisé en ce que,**
sur le fond du profilé rainuré (4) du rail de guidage (1), sont disposés des aimants (15), dont le champ magnétique se ferme par l'intermédiaire des extrémités libres des axes-boulons (10) des éléments de chaîne (5) en passant au-delà un entrefer (17).

2. Transporteur à chaîne selon la revendication 1,
**caractérisé en ce que**
les axes-boulons (10) des éléments de chaîne (5) possèdent, à leurs extrémités libres (13), des surfaces frontales planes (14), auxquelles des surfaces polaires (16) des aimants (15) sont respectivement opposées au-delà de l'entrefer (17).

3. Transporteur à chaîne selon la revendication 2,
**caractérisé en ce que,**
dans le cas d'un rail de guidage (1) s'étendant en ligne droite, les surfaces frontales (14) des axes-boulons (10) des éléments de chaîne (5) et les surfaces polaires (16) des aimants (15) sont parallèles les unes aux autres.

4. Transporteur à chaîne selon la revendication 3,
**caractérisé en ce que,**
le long de sections horizontales du chemin continu de la chaîne de transport, les surfaces frontales (14) des axes-boulons (10) des éléments de chaîne (5) et les surfaces polaires (16) des aimants (15) sont orientées horizontalement.

5. Transporteur à chaîne selon la revendication 3,
**caractérisé en ce que**
les surfaces frontales (14) des axes-boulons (10) des éléments de chaîne (5) et les surfaces polaires (16) des aimants (15) sont inclinées, à partir de la direction horizontale, respectivement de la direction de circulation, perpendiculairement à la direction de roulement des éléments de chaîne (5).

6. Transporteur à chaîne selon l'une des revendications 1 à 5,
**caractérisé en ce que**
les aimants (15) sont des aimants permanents.

7. Transporteur à chaîne selon l'une des revendications 1 à 6,
**caractérisé en ce que**
le rail de guidage (1) consiste en un support (2) central et en des rails de support (3) latéraux en saillie au-dessus dudit support (2), qui maintiennent entre eux le profilé rainuré (4), les aimants (15) étant disposés sur une face supérieure (20) du support (2), qui limite le profilé rainuré (4).

8. Transporteur à chaîne selon la revendication 7,
**caractérisé en ce que,**
sur la face supérieure (20) du support (2) du rail de guidage (1), est installé un dispositif de réception (19) pour les aimants (15).

9. Transporteur à chaîne selon la revendication 8,
**caractérisé en ce que**
le dispositif de réception (19) pour les aimants (15) est encastré dans le profilé rainuré (4), entre les rails de support (3) du rail de guidage (1).
